(19) **Europäisches Patentamt**

**European Patent Office**

**Office européen des brevets**

(11) **EP 0 986 470 B1**

(12) **EUROPÄISCHE PATENTSCHRIFT**

(45) Veröffentlichungstag und Bekanntmachung des Hinweises auf die Patenterteilung:
**28.11.2001 Patentblatt 2001/48**

(21) Anmeldenummer: **98934826.3**

(22) Anmeldetag: **29.05.1998**

(51) Int Cl.$^7$: **B41C 1/045**

(86) Internationale Anmeldenummer:
**PCT/DE98/01469**

(87) Internationale Veröffentlichungsnummer:
**WO 98/55306 (10.12.1998 Gazette 1998/49)**

(54) **VERFAHREN ZUR SIGNALVERARBEITUNG**

SIGNAL PROCESSING METHOD

PROCEDE DE TRAITEMENT DE SIGNAUX

(84) Benannte Vertragsstaaten:
**CH DE ES FR GB IT LI**

(30) Priorität: **02.06.1997 DE 19723002**

(43) Veröffentlichungstag der Anmeldung:
**22.03.2000 Patentblatt 2000/12**

(73) Patentinhaber: **Heidelberger Druckmaschinen Aktiengesellschaft**
**69115 Heidelberg (DE)**

(72) Erfinder:
• **FANGMEYER, Dieter**
  **D-24113 Kiel (DE)**
• **WIECHERING, Christian**
  **D-24147 Kiel (DE)**
• **LÜBCKE, Bernd**
  **D-24113 Molfsee (DE)**

(56) Entgegenhaltungen:
| WO-A-96/26836 | US-A- 5 029 011 |
| US-A- 5 491 559 | US-A- 5 663 803 |

**Beschreibung**

Die Erfindung bezieht sich auf das Gebiet der elektronischen Reproduktionstechnik und betrifft ein Verfahren zur Signalverarbeitung in einer elektronischen Graviermaschine zur Gravur von Druckformen, insbesondere von Druckzylindern, für den Tiefdruck.

In einer elektronischen Graviermaschine bewegt sich beispielsweise ein elektromagnetisches Gravierorgan mit einem Gravierstichel als Schneidwerkzeug in axialer Richtung an einem rotierenden Druckzylinder entlang. Der von einem Graviersteuersignal gesteuerte Gravierstichel schneidet eine Folge von in einem Tiefdruckraster angeordneten Vertiefungen, Näpfchen genannt, in die Mantelfläche des Druckzylinders. Das Graviersteuersignal wird in einer Signalaufbereitungsstufe durch Überlagerung eines die Tonwerte zwischen "Licht" (Weiß) und "Tiefe" (Schwarz) repräsentierenden Graviersignals mit einem periodischen Rastersignal (Vibration) gebildet. Während das Rastersignal eine vibrierende Hubbewegung des Gravierstichels zur Erzeugung des Rasters bewirkt, steuert das Graviersignal entsprechend den wiederzugebenden Tonwerten die Schnittiefen der in die Mantelfläche des Druckzylinders gravierten Näpfchen.

Aus der DE-A-23 36 089 ist ein elektromagnetisches Gravierorgan bekannt, d.h. ein Gravierorgan mit einem elektromagnetischen Antriebselement für den Gravierstichel. Das elektromagnetische Antriebselement besteht aus einem mit dem Graviersignal beaufschlagten, stationären Elektromagneten, in dessen Luftspalt sich der Anker eines Drehsystems bewegt. Das Drehsystem besteht aus einer Welle, dem Anker, einem Lager für die Welle und aus einer Dämpfungsvorrichtung. Ein Wellenende geht in einen raumfest eingespannten, federnden Torsionsstab über, während das andere Wellenende einen Hebel trägt, an dem der Gravierstichel angebracht ist. Auf den Anker der Welle wird durch das in dem Elektromagneten erzeugte Magnetfeld ein elektrisches Drehmoment ausgeübt, dem das mechanische Drehmoment des Torsionsstabes entgegenwirkt. Das elektrische Drehmoment lenkt die Welle um einen dem Graviersignal proportionalen Drehwinkel aus einer Ruhelage aus, und der Torsionsstab bringt die Welle in die Ruhelage zurück. Durch die Drehbewegung der Welle führt der Gravierstichel einen in Richtung auf die Mantelfläche eines Druckzylinders gerichteten Hub aus, welcher die Eindringtiefe des Gravierstichels in den Druckzylinder bestimmt.

Da das elektromagnetische Gravierorgan ein schwingungsfähiges System darstellt, zeigt der Gravierstichel, insbesondere bei Graviersignalsprüngen an steilen Konturen, ein fehlerhaftes Einschwingverhalten, das die Gravierqualität erheblich beeinträchtigt.

Beim sogenannten Nachzieheffekt erreicht der Gravierstichel an einer Kontur nur verzögert die durch den Graviersignalwert vorgegebene Sollgraviertiefe, und eine unscharfe Gravur einer an sich steilen Kontur ist die Folge. Ursache des Nachzieheffektes sind beispielsweise die nicht idealen Eigenschaften der mechanischen Dämpfung.

Beim sogenannten Prelleffekt führt der Gravierstichel an einer Kontur aufgrund einer ungenügenden mechanischen Dämpfung Schwingungen mit der mechanischen Eigenfrequenz aus, und der Gravierstichel graviert eine störende Mehrfachkontur.

Beim sogenannten Hysereseeffekt erreicht der Gravierstichel aufgrund der nicht idealen Eigenschaften der mechanischen Dämpfung niemals den durch den Graviersignalwert vorgegebene Sollgraviertiefe. Wenn beispielsweise ein schwarzer Ton in einer Graufläche graviert wird, macht sich der Hysereseeffekt dadurch bemerkbar, daß hinter dem schwarzen Ton ein dunkleres grau entsteht.

Aus der EP-B-0 437 421 ist bereits ein Verfahren bekannt, mit dem das Einschwingverhalten eines elektromagnetischen Gravierorgans durch eine spezielle elektronische Ansteuerung des Gravierorgans verbessert wird. Dazu wird das Graviersignal in einer Speicherstufe kurzfristig zwischengespeichert und um die Speicherzeit verzögert dem Gravierorgan zugeführt. Während der Speicherzeit wird aus dem Graviersignal ein in der Amplitude und der Wirkungsdauer einstellbares Korrektursignal abgeleitet, das dem Gravierorgan zeitlich voreilend zugeführt wird. In der Signalaufbereitungsstufe der Graviermaschine erfolgt unter anderem die Kompensation der oben genannten störenden Effekte des Gravierorgans, die Erzeugung des Rastersignals und die Überlagerung des Rastersignals mit dem korrigierten Graviersignal, um das Graviersteuersignal zur Ansteuerung des Gravierorgans zu gewinnen.

In einer herkömmlichen Signalverarbeitungsstufe werden die Signale analog verarbeitet, indem die Eingangssignale in digitaler Form angeliefert, digital/analog gewandelt und in analogen Netzwerken miteinander verknüpft werden, wobei das resultierende Signal dann in einem analogen Verstärker verstärkt und als Graviersteuersignal für das Gravierorgan ausgegeben wird.

Die Kompensation der störenden Effekte des Gravierorgans mit analogen Netzwerken hat den Nachteil, daß das Übertragungsverhalten der analogen Netzwerke nicht ohne weiteres optimal an das Übertragungsverhalten der Gravierorgane angepaßt werden kann und daß die analogen Netzwerke durch Toleranzen und Temperaturabhängigkeiten der Bauelemente nicht ausreichend stabil sind, um eine gute Langzeitstabilität und damit Gravierqualität zu erzeugen.

Aus der WO-A-9 634 746 ist ein Verfahren zur Signalverarbeitung in einer elektronischen Graviermaschine bekannt, bei dem die Gravurdaten bereits einer digitalen Filterung unterzogen werden. Der Nachteil dieses Verfahrens besteht darin, daß die digitale Filterung nach der Überlagerung von Graviersignal und Rastersignal erfolgt.

Aufgabe der vorliegenden Erfindung ist es daher, ein Verfahren zur Signalverarbeitung in einer elektronischen Graviermaschine zur Gravur von Druckformen, insbesondere von Druckzylindern, für den Tiefdruck derart zu verbessern, daß eine einfachere Signalfilterung zur möglichst vollständigen Kompensation der störenden Effekte eines Gravierorgans erreicht wird, um eine gute Gravierqualität zu erreichen.

Diese Aufgabe wird durch die Merkmale des Anspruchs 1 gelöst. Vorteilhafte Weiterbildungen und Ausgestaltungen sind in den Unteransprüchen angegeben.

Die Erfindung wird nachfolgend anhand der Fig. 1 bis 9 näher erläutert.

Es zeigen:

Fig. 1    ein prinzipielles Blockschaltbild einer Graviermaschine zur Gravur von Druckzylindern mit einer Signalaufbereitungsstufe,

Fig. 2    ein Ausführungsbeispiel für die Signalaufbereitungsstufe,

Fig. 3    ein Ausführungsbeispiel für einen Signalprozessor,

Fig. 4    ein Ausführungsbeispiel für ein FIR-Filter 2. Ordnung zur Kompensation des Prelleffektes eines Gravierorgans,

Fig. 5    eine grafische Darstellung zur Kompensation des Prelleffektes,

Fig. 6    ein Ausführungsbeispiel für ein IIR-Filter 2. Ordnung zur Kompensation des Nachzieheffektes,

Fig. 7    eine grafische Darstellung zur Kompensation des Nachzieheffektes,

Fig. 8    ein Ausführungsbeispiel für ein kombiniertes FIR/IIR-Filter und

Fig. 9    ein Flußdiagramm zur Kompensation des Hystereseeffektes.

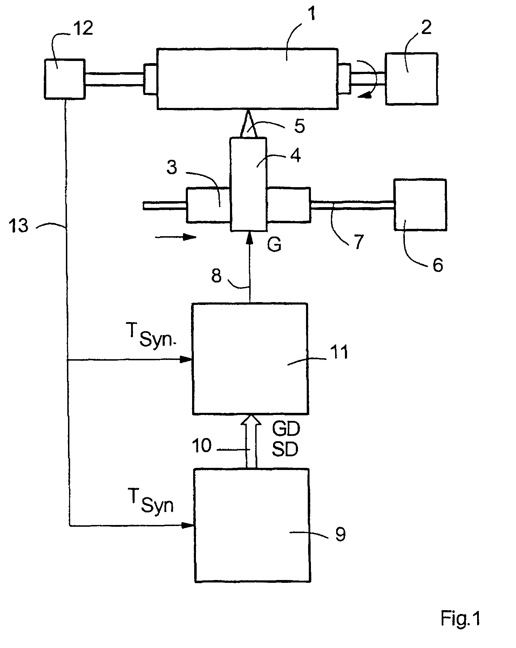

Fig. 1 zeigt ein prinzipielles Blockschaltbild einer Graviermaschine zur Gravur von Druckzylindern, Ein Druckzylinder (1) wird von einem Rotationsantrieb (2) rotatorisch angetrieben. Ein auf einem Gravierwagen (3) montiertes Gravierorgan (4) mit einem Gravierstichel (5) als Schneidwerkzeug bewegt sich mit Hilfe einer durch einen Gravierwagenantrieb (6) angetriebenen Spindel (7) in Achsrichtung an dem rotierenden Druckzylinder (1) entlang.

Der durch ein analoges Graviersteuersignal (G) auf einer Leitung (8) gesteuerte Gravierstichel (5) des Gravierorgans (4) schneidet gravierlinienweise eine Folge von in einem Gravurraster angeordneten Näpfchen in die Mantelfläche des rotierenden Druckzylinders (1), während sich das Gravierorgan (4) axial an dem Druckzylinder (1) entlang bewegt. Das Gravierorgan (4) ist beispielsweise mit einem elektromagnetischen Antrieb für den Gravierstichel (5) ausgerüstet.

Während ein periodisches Rastersignal eine vibrierende Hubbewegung des Gravierstichels (5) zur Erzeugung des Gravurrasters bewirkt, bestimmen die Gravurdaten (GD) entsprechend den zu gravierenden Tonwerten zwischen "Licht" und "Tiefe" die geometrischen Parameter der gravierten Näpfchen wie Querdiagonale, Längsdiagonale und Graviertiefe.

Die Gravurdaten (GD) werden in einem Gravurdatenrechner (9) Gravierlinie für Gravierlinie bereitgestellt, wobei jedem zu gravierenden Näpfchen ein Gravurdatum (GD) von mindestens einem Byte zugeordnet ist, welches unter anderem als Gravierinformation den zu gravierenden Tonwert enthält. Der Gravurdatenrechner (9) stellt außerdem Steuerdaten (SD) für die Signalverarbeitung bereit.

Gravurdaten (GD) und Steuerdaten (SD) werden über einen Datenbus (10) an eine Signalverarbeitungsstufe (11) weitergegeben, in der das Graviersteuersignal (G) für das Gravierorgan (4) erzeugt wird.

Zur Synchronisierung der Signalverarbeitung mit der Drehbewegung des Druckzylinders (1) ist ein Impulsgeber (12) mechanisch an den Druckzylinder (1) gekoppelt. Der Impulsgeber (12) erzeugt eine Synchronisierungstaktfolge ($T_{SYN}$), die über eine Leitung (13) an Gravurdatenrechner (9) und an die Signalaufbereitungsstufe (11) gegeben wird.

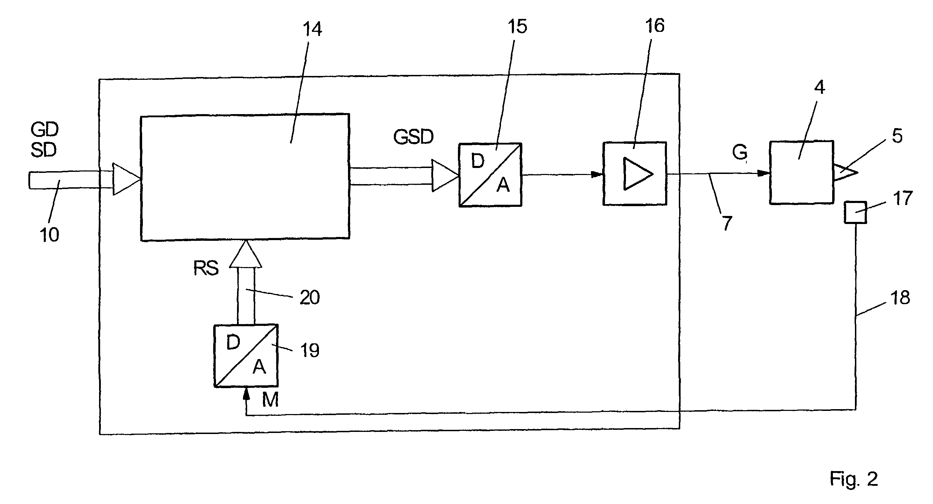

Fig. 2 zeigt ein Ausführungsbeispiel für die Signalaufbereitsungsstufe (11), in der die Gravurdaten (GD) und die Steuerdaten (SD) über den Datenbus (10) an einen Signalprozessor (14) übermittelt werden. In dem Signalprozessor (14) werden die Gravurdaten (GD) nach einer Übertragungsfunktion in Gravursteuerdaten (GSD) umgewandelt.

$$GSD = (GD \times k_1 + KD \times k_2) \times (EP_L \times k_3) + EP_T \times k_4 + FD \times k_5$$

In der Übertragungsfunktion bedeuten:

GD = Gravurdaten (Eingangsdaten)
GSD = Gravursteuerdaten (Ausgangsdaten)
KD = Korrekturdaten für Schnittiefenkorrektur
$EP_L$ = Einstellwert für "Licht"
$EP_T$ = Einstellwert für "Tiefe"
FD = Funktionswertdaten zur Erzeugung des Rastersignals und
$k_x$ = Übertragungskoeffizienten der Übertragungsfunktion

Als Signalprozessor (14) wird vorzugsweise ein Digitaler Signal Prozessor (DSP) verwendet, der schnelle Fließkommaoperationen ermöglicht, beispielsweise ein Digitaler Signal Prozessor vom Typ TMS 320C31 der Firma Texas Instruments.

Die in dem Signalprozessor (14) gewonnenen Gravursteuerdaten (GSD) werden in einem D/A-Wandler (15) in das analoge Graviersteuersignal (G) umgewandelt, das anschließend in einem nachgeschalteten analogen Verstärker (16) verstärkt und über die Leitung (8) an das Gravierorgan (4) zur Ansteuerung des Gravierstichels (5) weitergegeben wird. Der Verstärker (16) kann beispielsweise als geschalteter Stromverstärker ausgebildet sein.

Für eine Regelung kann an dem Gravierorgan (4) ein Meßorgan (17) angebracht sein, das im Ausführungsbeispiel die Hubbewegung des Gravierstichels (5) des Gravierorgans (4) mißt. Ein anderes Meßorgan kann die Betriebstemperatur des Gravierorgans (4) feststellen. Die entsprechenden analogen Meßsignale (M) werden über eine Rückkopplungsleitung (18) einem A/D-Wandler (19) zugeführt. Der A/D-Wandler (19) wandelt die analogen Meßsignale (M) in Rückkopplungsdaten (RD) um, die dem Signalprozessor (14) über einen Steuerbus (20) zugeführt werden.

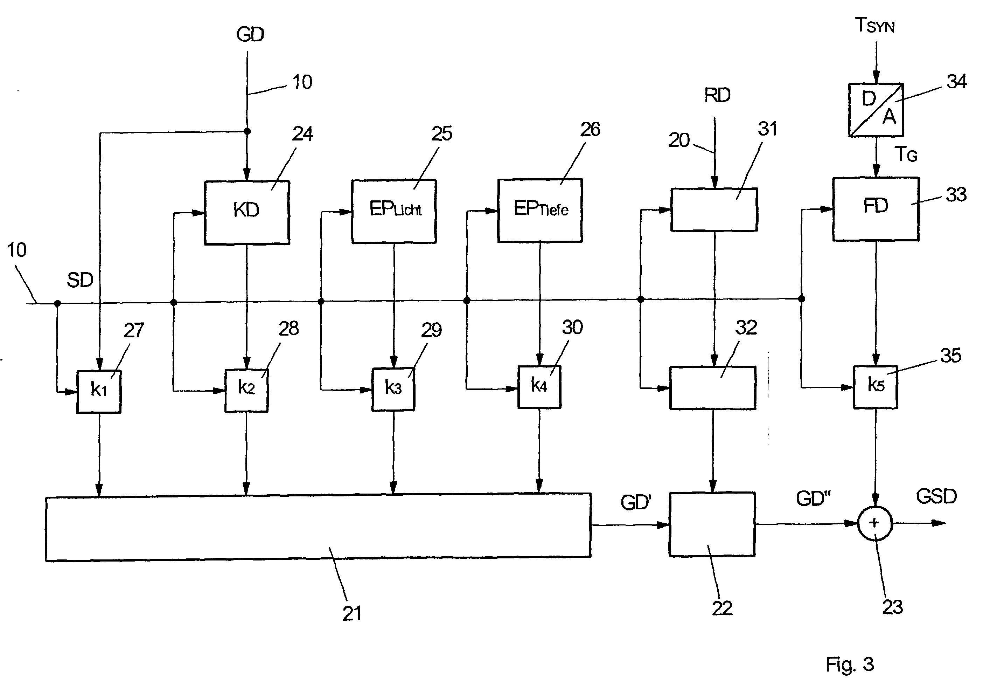

Fig. 3 zeigt ein Ausführungsbeispiel für den Signalprozessor (14). Der Signalprozessor (14) weist prinzipiell einen Rechner (21), ein Digitalfilter (22) und einen Addierer (23) auf, die in Reihe geschaltet sind.

In dem Rechner (21) werden die Gravurdaten (GD) zunächst gemäß einer Gleichung (I) korrigiert.

$$GD' = (GD \times k_1 + KD \times k_2) \times (EP_L \times k_3) + EP_T \times k_4 \qquad (I)$$

In Gleichung (I) bedeuten:

GD = Gravurdaten
GD' = korrigierte Gravurdaten
KD = Korrekturdaten für eine Schnittiefenkorrektur
$EP_L$ = Einstellwerte für "Licht"
$EP_T$ = Einstellwerte für "Tiefe" und
$k_x$ = Übertragungskoeffizienten

Die Korrektur der Gravurdaten (GD) besteht aus einer Schnittiefenkorrektur zum Ausgleich einer mechanischen Abnutzung des Gravierstichels (5) des Gravierorgans (4) und aus einer Kalibrierung der Gravurdaten (GD) für "Licht" und "Tiefe", wobei die Kalibrierung der Gravurdaten (GD) derart erfolgt, daß die gravierten Näpfchen für die Tonwerte "Licht" und "Tiefe" den vorgegebenen Soll-Tonwerten für "Licht" und "Tiefe" entsprechen.

Zur Korrektur der Gravurdaten (GD) ist in einem ersten Tabellenspeicher (24) eine Korrekturwert-Tabelle KD = f (GD) für die Schnittiefenkorrektur geladen, die durch die Gravurdaten (GD) auf dem Datenbus (10) adressierbar ist. Zwei Parameterspeicher (25, 26) enthalten die Einstellwerte ($EP_L$, $EP_T$) für "Licht" und 'Tiefe". Durch die Steuerdaten (SD) auf dem Datenbus (10) können eine neue Korrekturwert-Tabelle KD = f (GD) in den Tabellenspeicher (24) und neue Einstellwerte ($EP_L$, $EP_T$) in die Parameterspeicher (25, 26) geladen werden. Die Gravurdaten (GD) und die aus den Speichern (24, 25, 26) ausgelesenen Größen werden in Multiplizierern (27, 28, 29, 30) mit den dort gespeicherten Übertragungskoeffizienten ($k_1$, $k_2$, $k_3$, $k_4$) gewichtet, die ebenfalls durch die Steuerdaten (SD) geändert werden können. Die korrigierten Gravurdaten (GD') werden dem Digitalfilter (22) zugeführt.

In dem Digitalfilter (22) werden die korrigierten Gravurdaten (GD') zur linearen Kompensation der störenden Effekte des Gravierorgans (4), wie der Prell- und Nachzieheffekt, einer digitalen Filterung nach einer Filterfunktion H (z) mit statistischen Filterkoeffizienten $a_n$ und $b_n$ unterzogen, um die korrigierten und gefilterten Gravurdaten (GD") zu erhalten.

$$H(z) = \frac{GD''}{GD'} = \frac{a_0 + a_1 \cdot z^{-1} + a_2 \cdot z^{-2} + \dots + a_n \cdot z^{-n}}{1 + b_1 \cdot z^{-1} + b_2 \cdot z^{-2} + \dots + b_n \cdot z^{-n}}$$

Die Filterung der Gravurdaten (GD') erfolgt vor der Überlagerung des Rastersignals. Dadurch kann in vorteilhafter Weise mit konstanten Digitalfiltern gearbeitet werden, da die Filterkoeffizienten $a_n$ und $b_n$ dann nicht von den Einstellwerten für "Licht" und "Tiefe" abhängig sind. Außerdem wird Rechenzeit gespart, da das Rastersignal bei der Signalfilterung nicht berücksichtigt werden muß.

Die Filterkoeffizienten $a_n$ und $b_n$ werden in einem Koeffizientenrechner (31) berechnet und in einem Koeffizientenspeicher (32) gespeichert, von dem sie in das Digitalfilter (22) eingegeben werden. Die Filterkoeffizienten $a_n$ und $b_n$ werden derart generiert, daß die störenden Effekte des Gravierorgans (4) gerade kompensiert werden, wobei die Filterkoeffizienten $a_n$ als Verstärkungsfaktor so bemessen werden, daß die Verstärkung des gesamten Digitalfilters (22) gleich "1" ist. Das Zeitverhalten des Digitalfilters (22) ergibt sich aus den Polstellen und den Nullstellen der Filterfunktion.

Die Berechnung der erforderlichen Filterkoeffizienten $a_n$ und $b_n$ wird mit Hilfe von Berechnungsparametern durchgeführt, die dem Koeffizientenrechner (31) über die Steuerdaten (SD) zugeführt werden. Mit Hilfe der Steuerdaten (SD) können auch zuvor berechnete Sätze von Filterkoeffizienten $a_n$ und $b_n$ in dem Koeffizientenspeicher (32) ausgewählt und an das Digitalfilter (22) übertragen werden.

Die Berechnung der Filterkoeffizienten $a_n$ und $b_n$ kann in Abhängigkeit von zuvor ermittelten Parametern (Nullstellen und Polstellen) erfolgen, welche die Übertragungsfunktion des jeweils verwendeten Gravierorgans (4) beschreiben. Die Übertragungsfunktion des Gravierorgans (4) gibt dabei den Zusammenhang zwischen dem gemessenen Hub des Gravierstichels (5) des Gravierorgans (4) und dem zugeführten Graviersteuersignal (G) an.

In einer vorteilhaften Weiterbildung werden die Filterkoeffizienten $a_n$ und $b_n$ alternativ oder zusätzlich in Abhängigkeit von mindestens einem Gravurparameter wie Frequenz und Amplitude des periodischen Rastersignals und/oder Eigenresonanz und Dämpfungsgrad des Gravierorgans (4) berechnet.

In einer anderen vorteilhaften Weiterbildung werden die Filterkoeffizienten $a_n$ und $b_n$ in Abhängigkeit von Meßwerten über die Hubbewegung des Gravierstichels (5) und/oder über die Betriebstemperatur des Gravierorgans (4) einmalig berechnet oder durch eine adaptiven Steuerung oder Regelung laufend modifiziert.

Im Fall der adaptiven Steuerung werden Sollwerte für beispielsweise die Betriebstemperatur des Gravierorgans (4) und/oder für die Hubbewegung des Gravierstichels (5) des Gravierorgans (4) vorgegeben. Die entsprechenden Rückkopplungsdaten (RD) des Gravierorgans (4) werden als Istwerte dem Koeffizientenrechner (31) über den Steuerbus (20) zugeführt, in dem online die Filterkoeffizienten ($a_n$, $b_n$) in Abhängigkeit von dem Vergleich zwischen Sollwerten und Istwerten berechnet und über den Koeffizientenspeicher (32) an das Digitalfilter (22) weitergegeben werden.

In einem praktischen Ausführungsbeispiel werden die Gravurdaten (GD) zunächst zur Kompensation des Nachzieheffektes in einem separaten IIR-Filter oder in einen IIR-Anteil eines Gesamtfilters mit festen Filterkoeffizienten ($a_n$, $b_n$) gefiltert. Anschließend werden die gefilterten Gravurdaten (GD) zur Kompensation des Prelleffektes in einem separaten adaptiven FIR-Filter oder einem adaptiven FIR-Anteil eines Gesamtfilters mit variablen Filterkoeffizienten ($a_n$, $b_n$) nochmals gefiltert. Dabei kann über die Verstärkung des adaptiven Filters oder Filteranteiles eine Regelung der Hubbewegung des Gravierstichels (5) des Gravierorgans (4) erreicht werden.

Zur Kompensation des Prelleffektes wird in bevorzugter Weise ein FIR-Filter mindestens 2. Ordnung (FIR = Finite Impulse Response) mit zwei Nullstellen verwendet. Da als Ursache des Prelleffektes ein einfaches mechanisches Schwingungssystem zugrunde gelegt werden kann, wird zur Kompensation die Umkehrfunktion $H^{-1}(p)$ der Laplace-Transformierten $H(p)$ benutzt. Damit ergibt sich die digitale Kompensationsfunktion als Z-Transformierte zu : $H^{-1}(z) = a_0 + a_1 z^{-1} + a_2 z^{-2}$ mit zwei Nullstellen in der Filterfunktion.

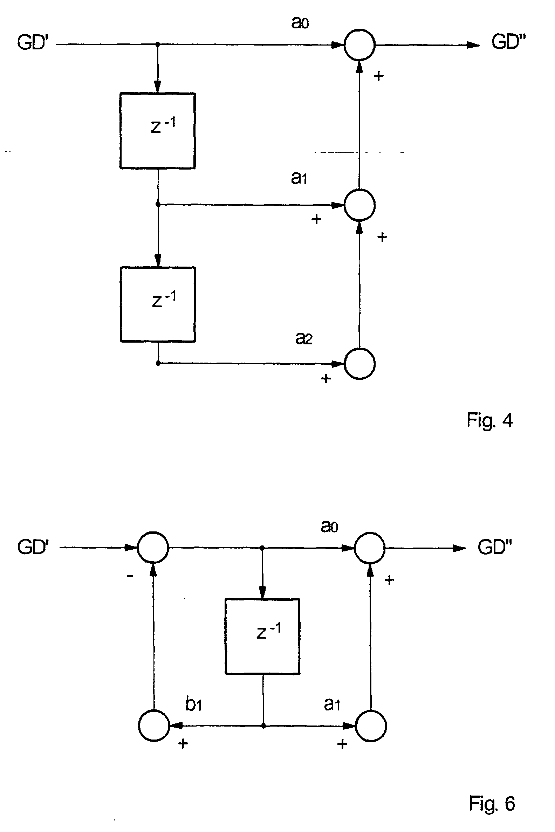

Fig. 4 zeigt ein Ausführungsbeispiel für ein FIR-Filter 2. Ordnung als Einzelfilter zur Kompensation des Prelleffektes des Gravierorgans (4).

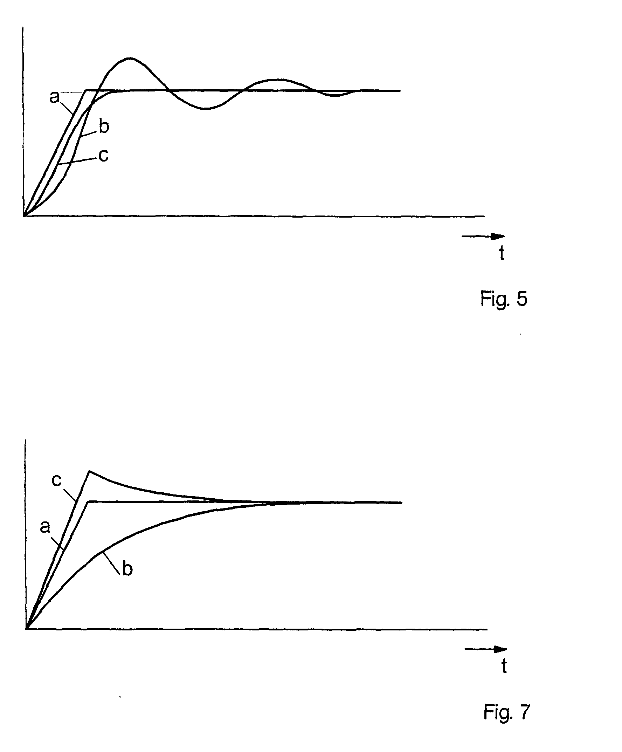

In Fig. 5 sind grafisch der Prelleffekt bei einem Signalsprung des Graviersteuersignals (G) und die Wirkung des FIR-Filters bei der Kompensation des Prelleffektes dargestellt, wobei (a) den Signalsprung des Graviersteuersignals, (b) den Verlauf der Stichelbewegung beim ungefilterten Graviersteuersignal und (c) den Verlauf der Stichelbewegung beim gefilterten Graviersteuersignal als Funktion der Zeit t zeigt.

Zur Kompensation des Nachzieheffektes wird in bevorzugter Weise ein IIR-Filter mindestens 2. Ordnung (IIR = Infinite Impulse Response) mit einer Nullstelle und einer Polstelle in der Filterfunktion verwendet.

Fig. 6 zeigt ein Ausführungsbeispiel für ein IIR-Filter 2. Ordnung als Einzelfilter zur Kompensation des Nachzieheffektes des Gravierorgans (4). In Fig. 7 sind grafisch der Nachzieheffekt und die Wirkung des IIR-Filters bei der Kompensation des Nachzieheffektes dargestellt, wobei (a) wiederum den Signalsprung des Graviersteuersignals, (b) den Verlauf der Stichelbewegung beim ungefilterten Graviersteuersignal und (c) den Verlauf der Stichelbewegung beim gefilterten Graviersteuersignal als Funktion der Zeit t zeigt.

Das Digitalfilter (22) kann eine kaskadierte, parallele oder eine direkte Form haben. Vorzugsweise ist das Digitalfilter (22) ein kombiniertes Digitalfilter vom FIR/IIR-Typ, das sich aus einem transversalen Anteil (FIR) mit den Filterkoeffizienten $a_n$ und einem rekursiven Anteil (IIR) mit den Filterkoeffizienten $b_n$ besteht.

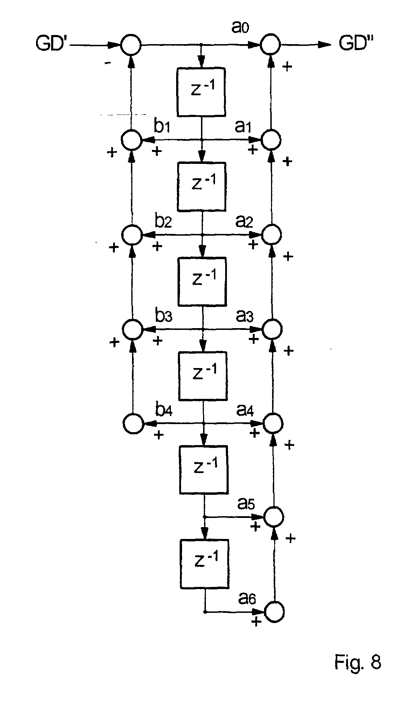

Fig. 8 zeigt ein kombiniertes Digitalfilter (22) vom FIR/IIR-Typ, das 4-FIR-Stufen mit 4 Polstellen und 6 IIR-Stufen mit 6 Nullstellen aufweist.

Die Kompensation des nicht linearen Hystereseeffektes kann durch eine an den Hystereseeffekt angepaßte Bearbeitung der Gravurdaten (GD) erfolgen. Der Hystereseeffekt in einem Gravierorgan (4) mit einem elektromagnetischen Antriebselement entsteht durch die Hysterese im Eisenpaket des Elektromagneten. Bei einem Sprung der Gravurdaten (GD) behält das Eisenpaket eine von dem zuvor wirksamen Wert des Gravurdatums (GD) abhängige Restmagnetisierung bei, wodurch der Gravierstichel (5) des Gravierorgans (4) nicht die Soll-Graviertiefe erreicht. Hysterese kann aber auch durch Reibung bzw. Dämpfung entstehen. Das geschieht z.B. dadurch, daß die Haftreibung größer als die Gleitreibung ist. In ähnlicher Weise verhält sich auch ein Gravierorgan mit einem piezoelektrischen Antriebselement.

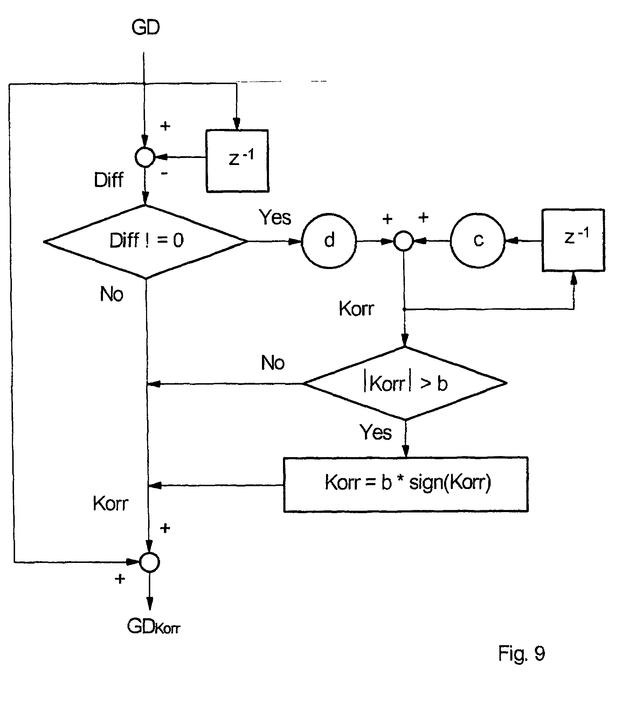

Durch die im Flußdiagramm der Fig. 9 dargestellte Bearbeitung der Gravurdaten (GD) wird der Hystereseeffekt mit Hilfe einer zur Hysteresekurve des Eisenpaketes inversen Hysteresekurve kompensiert. Durch entsprechende Wahl der Parameter b, c und d kann die inverse Hysteresekurve vielseitig verändert werden. Der Parameter b ist die Breite der Hysteresekurve. Die Parameter c und d bestimmen das Verhalten beim Richtungswechsel der Gravurdaten (GD). Dabei ist der Parameter c ein Faktor, der angibt, wie schnell die magnetische Vorgeschichte im Eisenpaket "vergessen" werden soll. Der Parameter d gibt die Steilheit des Übergangs in der Hysteresekurve an.

Gemäß dem in Fig. 9 gezeigten Flußdiagramm wird zunächst die Differenz (Diff) zwischen einem aktuelle Gravurdatum GD(n) und dem vorangegangenen Gravurdatum GD(n-1) nach folgender Gleichung berechnet:

$$Diff = GD(n) - GD(n-1)$$

Ist die Differenz Diff = 0 , hat also kein Sprung in den Gravurdaten stattgefunden, wird der alte Korrekturwert Korr(n-1) beibehalten. Ist die Differenz Diff ≠ 0, wird ein neuer Korrekturwert Korr(n) nach folgender Gleichung berechnet:

$$Korr(n) = c \times Korr(n-1) + d \times Diff$$

Anschließend wird der Betrag des Korrekturwerts Korr(n) auf b begrenzt und damit die Breite der Hysteresekurve festgelegt. Mit dem neuen Korrekturwert Korr(n) wird darauf das korrigierte Gravurdatum (GD*) nach folgender Gleichung berechnet:

$$GD_{korr} = GD(n) + Korr(n)$$

Die Signalbearbeitung zur Kompensation des Hystereseeffektes erfolgt in zweckmäßiger Weise vor der Filterung in dem Digitalfilter (22).

Nach der Kompensation der störenden Effekte des Gravierorgans werden die Gravursteuerdaten (GSD) zur Ansteuerung des Gravierorgans (4) gewonnen, indem den korrigierten und gefilterten Gravurdaten (GD") in dem Addierer (23) das Rastersignal in Form von gewichteten Funktionswertdaten (FD) gemäß Gleichung (III) hinzu addiert wird.

$$GSD = GD" + FD \times k_5 \qquad (III)$$

Die Funktionsdaten (FD) sind als Vibrationstabelle zur Erzeugung des periodischen Rastersignals in einem weiteren Tabellenspeicher (33) abgelegt. Die Funktionswertdaten (FD) werden aus dem Tabellenspeicher (33) durch eine Graviertaktfolge ($T_G$) ausgelesen, die durch Frequenzteilung in einer Frequenzteilerstufe (34) aus der Steuertaktfolge ($T_{SYN}$) gewonnen wird und die Frequenz des Rastersignals bestimmt. Die ausgelesenen Funktionswertdaten (FD) werden in einem weiteren Multiplizierer (35) mit dem Übertragungskoeffizienten ($k_5$) gewichtet und dem Addierer (23) zugeführt. Mit Hilfe der Steuerdaten (SD) kann in den Tabellenspeicher (33) eine neue Vibrationstabelle geladen und in dem Multiplizierer (35) der Übertragungskoeffizient ($k_5$) modifiziert werden.

## EP 0 986 470 B1

**Patentansprüche**

1. Verfahren zur Signalverarbeitung in einer elektronischen Graviermaschine zur Gravur von Druckformen, insbesondere von Druckzylindern, für den Tiefdruck, bei dem

   - Gravurdaten GD), welche zu gravierenden Tonwerte zwischen "Weiß" und "Schwarz" repräsentieren, bereitgestellt werden,
   - durch Überlagerung der Gravurdaten (GD) mit einem periodischen Rastersignal zur Erzeugung eines Gravurrasters ein Graviersteuersignal (G) gewonnen wird,
   - das Graviersteuersignal (G) die Hubbewegung eines Gravierstichels (5) eines Gravierorgans (4) steuert,
   - durch die Hubbewegung des Gravierstichels (5) eine Folge in dem Gravurraster angeordneten Näpfchen in die Druckform (1) graviert wird und
   - die Gravurdaten (GD) zur Kompensation einer fehlerhaften Hubbewegung des Gravierstichels (5) einer digitalen Filterung (22) unterzogen werden, **dadurch gekennzeichnet, daß** die digitale Filterung (22) der Gravurdaten (GD) vor der Überlagerung (23) mit dem Rastersignal durchgeführt wird.

2. Verfahren nach Anspruch 1, **dadurch gekennzeichnet, daß** die digitale Filterung der Gravurdaten (GD) nach einer Filterfunktion mit statistischen Filterkoeffizienten ($a_n$, $b_n$) erfolgt.

3. Verfahren nach Anspruch 1 oder 2, **dadurch gekennzeichnet, daß** die Filterung der Gravurdaten (GD) zur Kompensation des Prelleffektes mit einem digitalen FIR-Filter mindestens 2. Ordnung durchgeführt wird.

4. Verfahren nach Anspruch 3, **dadurch gekennzeichnet, daß** die Filterfunktion des FIR-Filters zwei Nullstellen aufweist.

5. Verfahren nach mindestens einem der Ansprüche 1 bis 4, **dadurch gekennzeichnet, daß** die Filterung der Gravurdaten (GD) zur Kompensation des Nachzieheffektes mit einem digitalen IIR-Filter mindestens 2. Ordnung durchgeführt wird.

6. Verfahren nach Anspruch 5, **dadurch gekennzeichnet, daß** die Filterfunktion des IIR-Filters eine Polstelle und eine Nullstelle aufweist.

7. Verfahren nach mindestens einem der Ansprüche 1 bis 6, **dadurch gekennzeichnet, daß** das FIR-Filter und das IIR-Filter in Reihe geschaltet sind.

8. Verfahren nach mindestens einem der Ansprüche 1 bis 6, **dadurch gekennzeichnet, daß** das FIR-Filter und das IIR-Filter zu einem Filter vom FIR/IIR-Typ vereinigt sind.

9. Verfahren nach mindestens einem der Ansprüche 1 bis 8, **dadurch gekennzeichnet, daß** die Filterkoeffizienten ($a_n$, $b_n$) in Abhängigkeit von der Übertragungsfunktion des Gravierorgans (4) berechnet werden.

10. Verfahren nach mindestens einem der Ansprüche 1 bis 9, **dadurch gekennzeichnet, daß** die Filterkoeffizienten ($a_n$, $b_n$) in Abhängigkeit von für die Gravur der Druckform (1) relevanten Gravurparametern berechnet werden.

11. Verfahren nach Anspruch 10, **dadurch gekennzeichnet, daß** die Filterkoeffizienten ($a_n$, $b_n$) in Abhängigkeit von mindestens einem der Gravurparameter wie Amplitude und Frequenz des Rastersignals und/oder Eigenfrequenz und Dämpfungsgrad des Gravierorgans (4) berechnet werden.

12. Verfahren nach mindestens einem der Ansprüche 1 bis 8, **dadurch gekennzeichnet, daß**

   - die Hubbewegung des Gravierstichels (5) des Gravierorgans (4) gemessen wird und
   - die Filterkoeffizienten ($a_n$, $b_n$) in Abhängigkeit von der gemessenen Hubbewegung berechnet werden.

13. Verfahren nach mindestens einem der Ansprüche 1 bis 8, **dadurch gekennzeichnet, daß**

   - die Betriebstemperatur des Gravierorgans (4) gemessen wird und
   - die Filterkoeffizienten ($a_n$, $b_n$) in Abhängigkeit von der gemessenen Betriebstemperatur berechnet werden.

**14.** Verfahren nach mindestens einem der Ansprüche 1 bis 13, **<u>dadurch gekennzeichnet</u>, daß**

- die Hubbewegung des Gravierstichels (5) des Gravierorgans (4) gemessen wird und
- die Filterkoeffizienten ($a_n$, $b_n$) in Abhängigkeit von den Meßwerten durch eine adaptive Steuerung modifiziert werden.

**15.** Verfahren nach mindestens einem der Ansprüche 1 bis 14, **<u>dadurch gekennzeichnet</u>, daß**

- die Betriebstemperatur des Gravierorgans (4) gemessen wird und
- die Filterkoeffizienten ($a_n$, $b_n$) in Abhängigkeit von den Meßwerten durch eine adaptive Steuerung modifiziert werden.

**16.** Verfahren nach mindestens einem der Ansprüche 1 bis 15, **<u>dadurch gekennzeichnet,</u> daß** der Hystereseeffekt durch Korrektur der Gravurdaten (GD) nach einer zur Hysteresekurve inversen Korrekturkurve kompensiert wird.

**17.** Verfahren nach Anspruch 16, **<u>dadurch gekennzeichnet,</u> daß** die Kompensation des Hystereseeffektes vor der digitalen Filterung der Gravurdaten (GD) durchgeführt wird.

**18.** Verfahren nach mindestens einem der Ansprüche 1 bis 17, **<u>dadurch gekennzeichnet,</u> daß** die Gravurdaten (GD) vor der digitalen Filterung einer Schnittiefenkorrektur unterzogen werden.

**19.** Verfahren nach mindestens einem der Ansprüche 1 bis 18, **<u>dadurch gekennzeichnet,</u> daß** die Gravurdaten (GD) vor der digitalen Filterung auf "Licht" und "Tiefe" kalibriert werden.

**20.** Verfahren nach mindestens einem der Ansprüche 1 bis 19, **<u>dadurch gekennzeichnet,</u> daß** das periodische Rastersignal aus gespeicherten Funktionswertdaten (FD) berechnet wird.

**21.** Verfahren nach mindestens einem der Ansprüche 1 bis 20, **<u>dadurch gekennzeichnet,</u> daß**

- die Funktionswertdaten (FD) und die gefilterten Gravurdaten (GD") addiert werden, um Gravursteuerdaten (GDS) zu erhalten und
- die Gravursteuerdaten (GSD) durch Digital/Analog-Wandlung in das Graviersteuersignal (G) umgewandelt werden.

**Claims**

**1.** Method for signal processing in an electronic engraving machine for the engraving of formes, particularly of printing cylinders, for intaglio printing, wherein

- gravure data (GD) representing tone values between "white" and "black" to be engraved are supplied,
- an engraving control signal (G) is obtained by superimposing a periodic screen signal on to the gravure data (GD) to produce an engraving screen,
- the engraving control signal (G) controls the reciprocating motion of an engraving stylus (5) of an engraving head (4),
- a series of cells arranged in the engraving screen is engraved in the forme (1) by the reciprocating motion of the engraving stylus (5) and
- the gravure data (GD) are subjected to digital filtering (22) to compensate for faulty reciprocating motion of the engraving stylus (5),

**characterized in that** the digital filtering (22) of the gravure data (GD) is performed prior to superimposition (23) of the screen signal.

**2.** Method according to Claim 1, **characterized in that** the digital filtering of the gravure data (GD) is performed in accordance with a filter function with statistical filter coefficients ($a_n$, $b_n$).

**3.** Method according to Claim 1 or Claim 2, **characterized in that** the filtering of the gravure data (GD) to compensate for the bounce effect is performed with a digital FIR filter of at least 2nd order.

**4.** Method according to Claim 3, **characterized in that** the filter function of the FIR filter has two zero values.

**5.** Method according to at least one of Claims 1 to 4, **characterized in that** the filtering of the gravure data (GD) to compensate for the streaking effect is performed with a digital IIR filter of at least 2nd order.

**6.** Method according to Claim 5, **characterized in that** the filter function of the IIR filter has a pole value and a zero value.

**7.** Method according to at least one of Claims 1 to 6, **characterized in that** the FIR filter and the IIR filter are connected in series.

**8.** Method according to at least one of Claims 1 to 6, **characterized in that** the FIR filter and the IIR filter are combined as a single FIR/IIR-type filter.

**9.** Method according to at least one of Claims 1 to 8, **characterized in that** the filter coefficients ($a_n$, $b_n$) are calculated as a function of the transfer function of the engraving head (4).

**10.** Method according to at least one of Claims 1 to 9, **characterized in that** the filter coefficients ($a_n$, $b_n$) are calculated as a function of gravure parameters relevant to the engraving of the forme (1).

**11.** Method according to Claim 10, **characterized in that** the filter coefficients ($a_n$, $b_n$) are calculated as a function of at least one of the gravure parameters such as amplitude and frequency of the screen signal and/or natural frequency and damping ratio of the engraving head (4).

**12.** Method according to at least one of Claims 1 to 8, **characterized in that**

- the amplitude of the reciprocating motion of the engraving stylus (5) of the engraving head (4) is measured and
- the filter coefficients ($a_n$, $b_n$) are calculated as a function of the measured amplitude.

**13.** Method according to at least one of Claims 1 to 8, **characterized in that**

- the operating temperature of the engraving head (4) is measured and
- the filter coefficients ($a_n$, $b_n$) are calculated as a function of the measured operating temperature.

**14.** Method according to at least one of Claims 1 to 13, **characterized in that**

- the amplitude of the reciprocating motion of the engraving stylus (5) of the engraving head (4) is measured and
- the filter coefficients ($a_n$, $b_n$) are modified by an adaptive control as a function of the measured values.

**15.** Method according to at least one of Claims 1 to 14, **characterized in that**

- the operating temperature of the engraving head (4) is measured and
- the filter coefficients ($a_n$, $b_n$) are modified by an adaptive control as a function of the measured values.

**16.** Method according to at least one of Claims 1 to 15, **characterized in that** the hysteresis effect is compensated by correction of the gravure data (GD) in accordance with a correction curve that is the inverse of the hysteresis curve.

**17.** Method according to Claim 16, **characterized in that** compensation for the hysteresis effect is performed prior to the digital filtering of the gravure data (GD).

**18.** Method according to at least one of Claims 1 to 17, **characterized in that** the gravure data (GD) are subjected to a depth of cut correction prior to digital filtering.

**19.** Method according to at least one of Claims 1 to 18, **characterized in that** the gravure data (GD) are calibrated for "light" and "depth" prior to digital filtering.

**20.** Method according to at least one of Claims 1 to 19, **characterized in that** the periodic screen signal is calculated from stored function value data (FD).

21. Method according to at least one of Claims 1 to 20, **characterized in that**

- the function value data (FD) and the filtered gravure data (GD") are added to yield engraving control data [(GSD)] and
- the engraving control data (GSD) are converted into the engraving control signal (G) by digital/analogue conversion.

**Revendications**

1. Procédé de traitement de signal dans une machine à graver électronique pour graver des matrices d'impression, notamment des cylindres d'impression pour l'impression en taille douce, selon lequel

- on fournit des données de gravures (GD) représentant des valeurs de teintes à graver comprises entre le « blanc » et le « noir »,
- par combinaison des données de gravures (GD) et d'un signal de trame, périodique pour générer une trame de gravure, on forme un signal de commande de gravure (G),
- le signal de commande de gravure (G) commande le mouvement de soulèvement du poinçon à graver (5) d'un organe de gravure (4),
- par le mouvement de soulèvement du poinçon à graver (5) on grave une succession de petites cuvettes de la trame de gravure dans la matrice d'impression (1) et
- on soumet les données de gravure (GD) à un filtrage numérique (22) pour compenser un mouvement de soulèvement défectueux du poinçon de gravure (5),

   **caractérisé en ce qu'**
   on effectue le filtrage numérique (22) des données de gravure (GD) avant la combinaison (23) avec le signal de trame.

2. Procédé selon la revendication 1,
   **caractérisé en ce qu'**
   on effectue le filtrage numérique des données de gravure (GD) selon une fonction de filtre avec des coefficients de filtre statistiques ($a_n$, $b_n$).

3. Procédé selon l'une quelconque des revendications 1 ou 2,
   **caractérisé en ce qu'**
   on effectue le filtrage des données de gravure (GD) pour compenser l'effet de rebondissement à l'aide d'un filtre FIR, numérique du deuxième ordre.

4. Procédé selon la revendication 3,
   **caractérisé en ce que**
   la fonction de filtre du filtre FIR présente deux points zéro.

5. Procédé selon au moins l'une quelconque des revendications 1 à 4,
   **caractérisé en ce qu'**
   on effectue le filtrage des données de gravure (GD) pour compenser l'effet de traînée à l'aide d'un filtre numérique IIR au moins du deuxième ordre.

6. Procédé selon la revendication 5,
   **caractérisé en ce que**
   la fonction de filtre du filtre IIR présente un point polaire et un point zéro.

7. Procédé selon au moins l'une quelconque des revendications 1 à 6,
   **caractérisé en ce que**
   le filtre FIR et le filtre IIR sont branchés en série.

8. Procédé selon l'une quelconque des revendications 1 à 6,

**caractérisé en ce que**
le filtre FIR et le filtre IIR sont réunis en un filtre de type FIR/IIR.

9.  Procédé selon l'une quelconque des revendications 1 à 8,
    **caractérisé en ce qu'**
    on calcule les coefficients de filtre ($a_n$, $b_n$) en relation avec la fonction de transfert de l'organe de gravure (4).

10. Procédé selon au moins l'une quelconque des revendications 1 à 9,
    **caractérisé en ce qu'**
    on calcule les coefficients de filtre ($a_n$, $b_n$) en fonction des paramètres de gravure concernant la gravure de la matrice d'impression (1).

11. Procédé selon la revendication 10,
    **caractérisé en ce qu'**
    on calcule les coefficients de filtre ($a_n$, $b_n$) en fonction d'au moins un paramètre de gravure tel que l'amplitude et la fréquence du signal de trame et/ou la fréquence propre et le degré d'amortissement de l'organe de gravure (4).

12. Procédé selon au moins l'une quelconque des revendications 1 à 8,
    **caractérisé en ce qu'**

    on mesure le mouvement de soulèvement du poinçon de gravure (5) de l'organe de gravure (4) et
    on calcule les coefficients de filtre ($a_n$, $b_n$) en fonction du mouvement de soulèvement mesuré.

13. Procédé selon au moins l'une quelconque des revendications 1 à 8,
    **caractérisé en ce qu'**

    on mesure la température de fonctionnement de l'organe de gravure (4) et
    on calcule les coefficients de filtre ($a_n$, $b_n$) selon la température de fonctionnement mesurée.

14. Procédé selon au moins l'une des revendications 1 à 13,
    **caractérisé en ce qu'**

    on mesure le mouvement de soulèvement du poinçon de gravure (5) de l'organe de gravure (4) et
    on modifie les coefficients de filtre ($a_n$, $b_n$) selon les valeurs de mesure à l'aide d'une commande adaptative.

15. Procédé selon au moins l'une quelconque des revendications 1 à 14,
    **caractérisé en ce qu'**

    on mesure la température de fonctionnement de l'organe de gravure (4) et
    on modifie les coefficients de filtre ($a_n$, $b_n$) selon les valeurs de mesure par une commande adaptative.

16. Procédé selon au moins l'une quelconque des revendications 1 à 15,
    **caractérisé en ce qu'**
    on compense l'effet d'hystérésis par correction des données de gravure (GD) selon une courbe de corrections inverse de la courbe d'hystérésis.

17. Procédé selon la revendication 16,
    **caractérisé en ce qu'**
    on compense l'effet d'hystérésis avant le filtrage numérique des données de gravure (GD).

18. Procédé selon au moins l'une quelconque des revendications 1 à 17,
    **caractérisé en ce qu'**
    on soumet les données de gravure (GD) avant le filtrage numérique à une correction de profondeur de taille.

19. Procédé selon au moins l'une quelconque des revendications 1 à 18,
    **caractérisé en ce qu'**
    on calibre les données de gravure (GD) avant le filtrage numérique en fonction de la « lumière » et « profondeur ».

**20.** Procédé selon au moins l'une quelconque des revendications 1 à 19,
**caractérisé en ce qu'**
on calcule le signal de trame périodique à partir de données de valeurs fonctionnelles mémorisées (FD).

**21.** Procédé selon au moins l'une des revendications 1 à 20,
**caractérisé en ce qu'**

on additionne les données de valeurs fonctionnelles (FD) et les données de gravures filtrées (GD") pour obtenir des données de commande de gravure (GSD) et
on convertit les données de commande gravure (GSD) par conversion numérique/analogique en un signal de commande de gravure (G).

Fig.1

GD
SD

10

14

GSD

15

D / A

16

7

G

4

5

17

18

19

D / A

M

20

RS

Fig. 2

Fig. 3

EP 0 986 470 B1

GD' ——————→ a0 ——→ GD"

z⁻¹

a1

z⁻¹

a2

Fig. 4

GD' ——————→ a0 ——→ GD"

z⁻¹

b1        a1

Fig. 6

Fig. 5

Fig. 7

Fig. 8

GD

+

$z^{-1}$

Diff

-

Diff ! = 0    Yes    d    +    +    c    $z^{-1}$

No

Korr

No    |Korr| > b

Yes

Korr = b * sign(Korr)

Korr

+

+

GDKorr

Fig. 9